# EUROPÄISCHE PATENTSCHRIFT

(11) **EP 2 818 748 B1**
(45) Veröffentlichungstag und Bekanntmachung des Hinweises auf die Patenterteilung: **25.04.2018**
(21) Anmeldenummer: 14154180.5
(22) Anmeldetag: 06.02.2014
(51) Int. Cl.: F16H 61/04, F16D 48/06, F16H 61/688, F16D 48/02

(54) **STEUERVERFAHREN FÜR EIN DOPPELKUPPLUNGSGETRIEBE**
CONTROL METHOD FOR A DUAL CLUTCH TRANSMISSION
PROCÉDÉ DE COMMANDE D'UNE BOÎTE DE VITESSES À DOUBLE EMBRAYAGE

(30) Priorität: 04.03.2013 DE 102013003520
(43) Veröffentlichungstag der Anmeldung: 31.12.2014
(73) Patentinhaber: GETRAG B.V. & Co. KG, 74199 Untergruppenbach (DE)
(72) Erfinder: Faust, Hartmut, 77815 Bühl (DE)
(74) Vertreter: Witte, Weller & Partner Patentanwälte mbB

(56) Entgegenhaltungen:
- EP-A2- 1 850 038
- DE-A1-102006 002 490
- DE-B3-102010 018 532
- US-A1- 2013 045 833

## Beschreibung

Die vorliegende Erfindung betrifft ein Verfahren zum Steuern eines Antriebsstranges eines Kraftfahrzeuges, der einen Antriebsmotor und ein Doppelkupplungsgetriebe aufweist, wobei das Doppelkupplungsgetriebe eine erste Reibkupplung und eine zweite Reibkupplung sowie ein erstes Teilgetriebe und ein zweites Teilgetriebe aufweist, um einen ersten Leistungsübertragungszweig und einen zweiten Leistungsübertragungszweig einzurichten, wobei das Doppelkupplungsgetriebe eine Kupplungsaktuatoreinrichtung zum Betätigen der Reibkupplungen sowie eine Schaltaktuatoreinrichtung zum Ein- und Auslegen von Gangstufen des Doppelkupplungsgetriebes aufweist.

Antriebsstränge mit derartigen Doppelkupplungsgetrieben sind allgemein bekannt. Durch überschneidende Betätigung der zwei Reibkupplungen kann dabei Antriebsleistung von dem einen Leistungsübertragungszweig zugkraftunterbrechungsfrei auf den anderen Leistungsübertragungszweig übergeben werden. Das eine Teilgetriebe beinhaltet in der Regel die ungeraden Gangstufen und das andere Teilgetriebe die geraden Gangstufen. In dem Teilgetriebe mit den geraden Gangstufen ist vorzugsweise auch die Rückwärtsgangstufe integriert.

Die Kupplungsaktuatoreinrichtung kann Elektromotoren als Aktuatoren beinhalten. Bevorzugt ist jedoch, wenn die Reibkupplungen jeweils mittels geeigneter Hydraulikaktuatoren betätigt werden.

Die Schaltaktuatoreinrichtung kann ebenfalls hydraulische Aktuatoren beinhalten. In diesem Fall ist es bekannt, für jedes Schaltkupplungspaket (das jeweils zwei benachbarte Schaltkupplungen aufweist) einen Schalthydraulikzylinder als Aktuator vorzusehen. Ferner ist es bekannt, zur Betätigung der Schaltkupplungen der Teilgetriebe Elektromotoren einzusetzen. Die Schalt-Elektromotoren können dabei konzentrisch zu der Schaltkupplung angeordnet sein.

In einer weiteren bekannten Ausführungsform werden die Gangstufen des Doppelkupplungsgetriebes mittels wenigstens einer Schaltwalze betätigt. Die Schaltwalze wird dabei vorzugsweise mittels eines Elektromotors angetrieben, kann jedoch auch durch einen Hydraulikantrieb angetrieben sein.

In einer Variante weist das Doppelkupplungsgetriebe genau eine Schaltwalze auf. Bei dieser Ausführungsform sind die Gangwechsel in der Regel rein sequentiell durchzuführen. Mehrfachschaltungen über eine oder mehrere Gangstufen hinweg sind hierbei relativ zeitaufwendig.

In einer weiteren Variante ist es bekannt, für jedes Teilgetriebe eine eigenen Schaltwalze vorzusehen, wobei die Schaltwalzen unabhängig voneinander betätigbar sind. Auch bei dieser Ausführungsform verbleibt ein Problem hinsichtlich relativ langer Schaltzeiten bei Mehrfachschaltungen.

Aus der DE10 2010 018532 A1 ist ein Verfahren zum Schalten eines Doppelkupplungsgetriebes bekannt, wobei das Doppelkupplungsgetriebe zwei Antriebswellen und eine Getriebeausgangswelle aufweist, wobei der ersten Antriebswelle eine erste Kupplung und der zweiten Antriebswelle eine zweite Kupplung zugeordnet ist und beide Kupplungen vollständig oder teilweise offenbar bzw. schließbar sind, wobei der ersten Antriebswelle und der zweiten Antriebswelle jeweils bestimmte Gangstufen zugeordnet sind, wobei durch die erste Kupplung und die erste Antriebswelle zumindest teilweise ein erster Kraftübertragungsweg gebildet ist und wobei durch die zweite Kupplung und die zweite Antriebswelle zumindest teilweise ein zweiter Kraftübertragungsweg gebildet ist. Ausgehend von einem Quellgang soll in einen Zielgang geschaltet werden, wobei vor dem Schalten in den Zielgang zumindest kurzfristig in einen Stützgang geschaltet wird, wenn der Zielgang und der Quellgang derselben Antriebswelle zugeordnet sind. Mit einer ununterbrochenen Reduktion des übertragenen Kupplungsmoments an der dem Quellgang zugeordneten Kupplung auf den Wert Null wird begonnen, bevor mit dem Schließen der dem Stützgang zugeordneten Kupplung begonnen wird.

Das vorliegende Steuerverfahren geht von einem Zustand aus, bei dem das Fahrzeug mit einer hohen Quellgangstufe betrieben wird. Wenn ausgehend von diesem Ausgangszustand eine Mehrfach-Rückschaltung erforderlich ist, beispielsweise bei einem Kickdown oder einem Bremsvorgang, kann es bei Doppelkupplungsgetrieben, deren Schaltaktuatoreinrichtung eine oder zwei Schaltwalzen aufweist, zu relativ langen Verzögerungen kommen, bis die richtige Gangstufe eingelegt ist.

Bei einem Kickdown, bei dem in der Regel ein bestimmter Weg des Gaspedals erreicht wird beziehungsweise überschritten wird, wird ausgehend von dem jeweiligen Fahrzustand eine niedrigstmögliche Zielgangstufe errechnet. Anschließend wird die Rückschaltung von der hohen Quellgangstufe in die niedrigstmögliche Zielgangstufe durchgeführt, was jedoch in manchen Fällen relativ lange dauern kann und insbesondere beim Einleiten von Überholvorgängen oder dergleichen nicht wünschenswert ist.

Vor diesem Hintergrund ist es eine Aufgabe der Erfindung, ein verbessertes Steuerverfahren für einen Doppelkupplungsgetriebe-Antriebsstrang anzugeben, wobei insbesondere der Komfort verbessert werden kann.

Die obige Aufgabe wird gelöst durch ein Verfahren zum Steuern eines Antriebsstranges eines Kraftfahrzeuges, der einen Antriebsmotor und ein Doppelkupplungsgetriebe aufweist, wobei das Doppelkupplungsgetriebe eine erste Reibkupplung und eine zweite Reibkupplung sowie ein erstes Teilgetriebe und ein zweites Teilgetriebe aufweist, um einen ersten Leistungsübertragungszweig und einen zweiten Leistungsübertragungszweig einzurichten, wobei das Doppelkupplungsgetriebe eine Kupplungsaktuatoreinrichtung zum Betätigen der Reibkupplungen sowie eine Schaltaktuatoreinrichtung zum Ein- und Auslegen von Gangstufen des Doppelkupplungsgetriebes aufweist, mit den folgenden, von einem Fahrbetrieb des Kraftfahrzeuges in einer hohen Quellgangstufe ausgehenden Schritten:
- Ableiten eines ersten Schaltsignals aus einer Betätigung eines Stellgliedes durch den Fahrer;
- Errechnen einer Zielgangstufe, die niedriger ist als die Quellgangstufe und die dem ersten Schaltsignal entspricht;
- Auswählen einer Zwischengangstufe zwischen der Quellgangstufe und der Zielgangstufe, Öffnen der der Quellgangstufe entsprechenden Reibkupplung und Schließen der der Zwischengangstufe entsprechenden Reibkupplung, um Antriebsleistung über den der Zwischengangstufe entsprechenden Leistungsübertragungszweig zu übertragen;
- Einlegen der Zielgangstufe, Öffnen der der Zwischengangstufe entsprechenden Reibkupplung und Schließen der der Zielgangstufe entsprechenden Reibkupplung für den Fall, dass ein zweites Schaltsignal aus einer Betätigung eines Stellgliedes durch den Fahrer abgeleitet wird.

Das vorliegende Steuerverfahren geht von einem Fahrbetrieb des Kraftfahrzeuges in einer hohen Quellgangstufe aus, also insbesondere der höchsten Gangstufe des Doppelkupplungsgetriebes, oder der zweithöchsten oder der dritthöchsten Gangstufe des Doppelkupplungsgetriebes. Ferner geht das vorliegende Steuerverfahren insbesondere von einem solchen Fahrbetrieb aus, bei dem die Quellgangstufe in einem relativ niedrigen Geschwindigkeitsbereich verwendet wird, derart, dass es aus diesem Fahrbetrieb heraus möglich ist, wenigstens zwei, vorzugsweise jedoch drei oder sogar noch mehr Gangstufen herunterzuschalten, ohne in der Zielgangstufe an die Drehzahlbegrenzung zu gelangen.

Die Geschwindigkeit des Kraftfahrzeuges kann dabei insbesondere im Bereich von 30 bis 130 km/h liegen, vorzugsweise im Bereich von 30 bis 100 km/h, und insbesondere im Bereich von 30 bis 80 km/h.

Der Antriebsmotor des bei dem Steuerverfahren verwendeten Antriebsstranges ist vorzugsweise ein Verbrennungsmotor, wobei der Antriebsmotor auch als Hybrid-Motor ausgebildet sein kann. Ferner ist es in manchen Varianten möglich, einen Eingang des Doppelkupplungsgetriebes mit einer elektrischen Maschine zu verbinden, um auf diese Weise einen Hybrid-Antriebsstrang einzurichten.

Durch die Betätigung des Stellgliedes durch den Fahrer wird einer Steuervorrichtung ein Rückschaltwunsch mitgeteilt beziehungsweise ein solcher Rückschaltwunsch lässt sich aus dieser Betätigung ableiten. Die Steuervorrichtung erzeugt hieraus ein erstes Schaltsignal.

Die sich aus dem ersten Schaltsignal ergebende Zielgangstufe ist vorzugsweise die für den Zustand vor dem Betätigen des Stellgliedes niedrigst mögliche Gangstufe. Hierdurch soll es generell möglich sein, in der so errechneten Zielgangstufe ein maximal mögliches Zug-oder Schubmoment bereitzustellen. Die Zielgangstufe ist, wie gesagt, wenigstens um zwei Stufen niedriger als die Quellgangstufe (beispielsweise Quellgangstufe 7 und Zielgangstufe 5, derart, dass zwischen diesen Gangstufen noch eine Zwischengangstufe einlegbar ist).

Von besonderem Vorzug ist es, wenn die errechnete Zielgangstufe wenigstens drei Gangstufen, insbesondere vier Gangstufen niedriger ist als die Quellgangstufe.

Insbesondere bei Doppelkupplungsgetrieben, deren Schaltaktuatoreinrichtung eine Schaltwalze aufweist, ist es generell bekannt, bei einem derartigen Mehrfach-Rückschaltvorgang sämtliche dazwischenliegenden Gangstufen kurzzeitig einzulegen und über eine überschneidende Betätigung der Reibkupplungen auch mit dem Abtrieb des Kraftfahrzeuges (den angetriebenen Rädern) zu verbinden. Gerade bei größeren Mehrfach-Rückschaltungen ist der hierdurch erforderliche Zeitaufwand bis zum Erreichen der Zielgangstufe jedoch relativ hoch. Die gleiche Problematik kann sich ergeben, wenn die Schaltaktuatoreinrichtung zwei Schaltwalzen aufweist.

Bei Doppelkupplungsgetrieben, deren Schaltaktuatoreinrichtung einzelne, unabhängig voneinander ansteuerbare Schaltzylinder aufweist, ist dieses Problem in der Regel nur in geringerem Maße vorhanden.

Die vorliegende Erfindung geht nun davon aus, dass auf dem Weg von der Quellgangstufe in die Zielgangstufe eine Zwischengangstufe eingelegt und mit dem Abtrieb verbunden wird. Aufgrund der Tatsache, dass viele moderne Antriebsmotoren bereits bei relativ niedrigen Drehzahlen oder über einen relativ großen Drehzahlbereich ein relativ hohes Drehmoment bereitstellen, kann das dann über die Zwischengangstufe einrichtbare Zug- oder Schubmoment für den Fahrerwunsch in vielen Fällen hinreichend sein.

Wenn beispielsweise ein Fahrer aus einer niedrigtourigen langsamen Fahrweise in einer hohen Quellgangstufe (beispielsweise Gangstufe 7) ein Stellglied so betätigt, dass sich hieraus eine niedrige Zielgangstufe (zum Beispiel Gangstufe 3) errechnet, dann wird beispielsweise zunächst eine Zwischengangstufe wie die Gangstufe 4 eingelegt und über die Zwischengangstufe wird Antriebsleistung auf den Abtrieb übertragen. In vielen Fällen wird das über die Zwischengangstufe erzielbare Antriebsmoment für den Wunsch des Fahrers hinreichend sein.

In diesen Fällen wäre ein weiteres Herunterschalten von der Zwischengangstufe in die Zielgangstufe überflüssig.

Das vorliegende Steuerverfahren geht folglich davon aus, dass die Zielgangstufe nur dann eingelegt wird und die Antriebsleistung auf den der Zielgangstufe entsprechende Leistungszweig übertragen wird, wenn aus einer Betätigung eines Stellgliedes durch den Fahrer ein zweites Schaltsignal abgeleitet wird.

Demzufolge wird bei dem erfindungsgemäßen Verfahren abgefragt, ob der Fahrer den Rückschaltwunsch, aus dem sich die Zielgangstufe errechnet hat, quasi "bestätigt".

Die Ableitung des zweiten Schaltsignals kann sich dabei aus der Art und Weise und/oder der Dauer der Betätigung des Stellsignals durch den Fahrer ableiten lassen. Auch ist es möglich, dass der Fahrer das gleiche oder ein anderes Stellglied auf eine bestätigende Art und Weise nach der ersten Betätigung des Stellgliedes betätigt.

Hierdurch können in vielen Fällen unnötige Schaltvorgänge, die auch zu Zeitverzögerungen führen können, vermieden werden.

Die Aufgabe wird somit vollkommen gelöst.

Bei dem erfindungsgemäßen Steuerverfahren ist es von besonderem Vorzug, wenn für den Fall, dass nach dem Ableiten des ersten Schaltsignals innerhalb einer vorgegebenen Zeitspanne kein zweites Schaltsignal aus einer Betätigung eines Stellgliedes durch den Fahrer abgeleitet wird, zumindest das Öffnen der der Zwischengangstufe entsprechenden Reibkupplung und das Schließen der der Zielgangstufe entsprechenden Reibkupplung nicht durchgeführt werden.

Bei dieser Ausführungsform wird insbesondere auf eine vorgegebene Zeitspanne abgestellt. Dabei kann nach dem Übertragen von Antriebsleistung über die Zwischengangstufe kann für den Fall, dass die Zielgangstufe in dem anderen Teilgetriebe als die Zwischengangstufe liegt, die Zielgangstufe bereits eingelegt worden sein. Nichtsdestotrotz kann kann die Übergabe von Antriebsleistung von dem Leistungsübertragungszweig der Zwischengangstufe auf den Leistungsübertragungszweig der Zielgangstufe für den Fall unterbleiben, dass sich aus der Betätigung eines Stellgliedes innerhalb der vorgegebenen Zeitspanne kein zweites Schaltsignal ableiten lässt.

Ferner ist es vorteilhaft, wenn die Schaltaktuatoreinrichtung eine erste Schaltwalze zum Ein- und Auslegen von Gangstufen des ersten Teilgetriebes und eine zweite Schaltwalze zum Ein- und Auslegen von Gangstufen des zweiten Teilgetriebes aufweist, wobei die Quellgangstufe einem der zwei Teilgetriebe zugeordnet ist und wobei die Zwischengangstufe dem anderen Teilgetriebe zugeordnet ist.

Bei einer derartigen Schaltaktuatoreinrichtung lassen sich die Schaltwalzen vorzugsweise unabhängig voneinander betätigen.

Die Zwischengangstufe wird bei einer Mehrfachrückschaltung in diesem Fall vorzugsweise so ausgewählt, dass die Zwischengangstufe nicht in dem gleichen Teilgetriebe liegt wie die Quellgangstufe, sondern in dem anderen Teilgetriebe. Demzufolge kann das Einlegen der Zwischengangstufe vorzugsweise so erfolgen, dass nur eine Übergabe von Antriebsleistung von dem Quellgangstufen-Leistungsübertragungszweig auf den Zwischengang-Leistungsübertragungszweig erforderlich ist. Vor dieser Übergabe von Antriebsleistung ist es gegebenenfalls notwendig, in dem der Zwischengangstufe zugeordneten Teilgetriebe die Zwischengangstufe einzulegen, wenn diese noch nicht eingelegt war.

Demzufolge beinhaltet der Schritt des Auswählens der Zwischengangstufe vorzugsweise, vor dem Schritt des Schließens der der Zwischengangstufe entsprechenden Reibkupplung die Zwischengangstufe in dem zugeordneten Teil einzulegen, falls die Zwischengangstufe nicht bereits eingelegt ist.

In einer weiteren bevorzugten Ausführungsform ist die Zielgangstufe dem gleichen Teilgetriebe zugeordnet wie die Quellgangstufe, wobei nach dem Öffnen der der Quellgangstufe entsprechenden Reibkupplung die Zielgangstufe in jenem Teilgetriebe eingelegt wird, um für den Fall des Ableitens des zweiten Schaltsignals das Öffnen der der Zwischengangstufe entsprechenden Reibkupplung und das Schließen der der Zielgangstufe entsprechenden Reibkupplung verzögerungsarm durchführen zu können.

In einer alternativen Ausgestaltung ist die Zielgangstufe dem gleichen Teilgetriebe zugeordnet wie die Zwischengangstufe, wobei nach dem Auslegen der Quellgangstufe in dem der Quellgangstufe zugeordneten Teilgetriebe eine zwischen der Zwischengangstufe und der Zielgangstufe liegende Füllgangstufe eingelegt wird, wobei für den Fall des Ableitens des zweiten Schallsignals die der Zwischengangstufe entsprechende Reibkupplung geöffnet und die der Füllgangstufe entsprechende Reibkupplung geschlossen wird, wobei nach dem Auslegen der Zwischengangstufe die Zielgangstufe eingelegt wird und wobei anschließend die der Füllgangstufe entsprechende Reibkupplung geöffnet und die der Zielgangstufe entsprechende Reibkupplung geschlossen wird.

Bei dieser Ausführungsform wird nach dem Ableiten des zweiten Schaltsignals die Zielgangstufe folglich eingelegt, indem die Antriebsleistung zunächst von den Zwischengangstufen-Leistungsübertragungszweig auf den anderen Leistungsübertragungszweig übertragen wird, dem die Füllgangstufe zugeordnet ist. Schließlich erfolgt wiederum eine Übertragung von Antriebsleistung von dem Füllgangstufen-Leistungsübertragungszweig auf den Zielgangstufe-Leistungsübertragungszweig.

In einer alternativen Ausführungsform weist die Schaltaktuatoreinrichtung eine Schaltwalze zum Ein- und Auslegen von Gangstufen des ersten und des zweiten Teilgetriebes aus.

Bei dieser Ausführungsform können Gangwechsel nur rein sequentiell erfolgen, so dass es bei einer Rückschaltung von beispielsweise der Gangstufe 7 in die Gangstufe 3 generell notwendig ist, zwischendurch die Gangstufe 6 einzulegen, die Gangstufe 5 und die Gangstufe 4.

Auch bei dieser Ausführungsform ist es jedoch vorteilhaft, wenn die sequentielle Schaltabfolge bis hin zu der Zielgangstufe nicht immer durchgeführt wird, nachdem ein erstes Schaltsignal errechnet worden ist, sondern nur dann, wenn ein zweites Schaltsignal abgeleitet werden kann, das die Zielgangstufe quasi "bestätigt".

Ein Stellglied, aus dessen Betätigung sich das erste und/oder das zweite Schaltsignal ableiten lassen, kann beispielsweise das Gaspedal des Kraftfahrzeuges sein.

Bei dieser Ausführungsform ist es von Vorzug, wenn das erste und/oder das zweite Schaltsignal aus dem Weg des Gaspedals und/oder aus einer ersten und/oder zweiten zeitlichen Ableitung des Weges des Gaspedals abgeleitet wird.

Mit anderen Worten kann das erste Schaltsignal und/oder das zweite Schaltsignal aus dem Gaspedalweg und/oder aus einer Art und Weise, wie das Gaspedal betätigt wird (also beispielsweise schnell oder langsam) abgeleitet werden. Die Einbeziehung des Weges des Gaspedales kann beispielsweise beinhalten, dass ein Kickdown-Schalter betätigt wird. Der Kickdown-Schalter kann ein mechanischer Schalter sein, der mit dem Gaspedal gekoppelt ist. Vorzugsweise wird der Weg des Gaspedals jedoch gemessen und der Kickdown-Schalter ist durch einen Schwellenwertvergleich in der Steuervorrichtung hinterlegt.

Das zweite Schaltsignal kann hierbei beispielsweise durch einen zweiten Kickdown-Schalter realisiert sein, also beispielsweise durch einen zweiten Schwellenwert, der sich von dem ersten Kickdown-Schwellenwert unterscheidet. Mit anderen Worten könnte das zweite Schaltsignal nur für den Fall abgeleitet werden, wenn der Fahrer das Gaspedal so weit durchgetreten hat, dass sowohl der erste als auch der zweite Schwellenwert überschritten werden. Alternativ oder zusätzlich hierzu kann auch die Geschwindigkeit der Gaspedalbewegung einbezogen werden, ob dieses also zügig oder zögerlich niedergetreten wird. Wenn die Geschwindigkeit des Bewegens des Gaspedals beispielsweise einen Geschwindigkeits-Schwellenwert überschreitet, kann dies dazu führen, dass hieraus sowohl das erste als auch das zweite Schaltsignal abgeleitet werden, also die Zielgangstufe auf jeden Fall eingelegt wird. Wenn hingegen die Geschwindigkeit des Betätigens des Gaspedals unterhalb eines derartigen Schwellenwertes bleibt, kann dies vorzugsweise so interpretiert werden, dass das zweite Schaltsignal nicht ausgelöst beziehungsweise abgeleitet wird.

Gemäß einer besonders bevorzugten Ausführungsform wird das erste Schaltsignal abgeleitet, wenn ein mit dem Gaspedal des Kraftfahrzeuges gekoppelter Kickdown-Schalter betätigt wird, und wobei das zweite Schaltsignal abgeleitet wird, wenn der Kickdown-Schalter innerhalb einer vorgegebenen Zeitspanne ein zweites Mal betätigt wird.

Die vorgegebene Zeitspanne kann beispielsweise kleiner sein als zwei Sekunden, vorzugsweise kleiner als eine Sekunde.

Der Kickdown-Schalter kann ein mechanischer oder, wie oben beschrieben, eine Software-Schalter mittels eines Kickdown-Schwellenwertes sein.

Das zweite Betätigen des Kickdown-Schalters beinhaltet folglich, dass der Fahrer das Gaspedal nach dem ersten Kickdown das Gaspedal wieder zumindest etwas zurücknimmt und anschließend erneut niederdrückt.

In einer weiteren Variante ist es möglich, das zweite Schaltsignal aus einer Betätigung des Gangwahlschalters abzuleiten. Bei dieser Variante wird das erste Schaltsignal vorzugsweise über einen mechanischen oder Software-Kickdownschalter abgeleitet, und das zweite Schaltsignal kann hierbei beispielsweise aus einer Betätigung eines Gangschalthebels abgeleitet werden, bei dem es sich insbesondere um einen Herunterschalt- oder um einen Hochschaltgangwahlschalter handelt, also beispielsweise um eine Schaltwippe am Lenkrad oder um einen Schalthebel in einer Hoch- beziehungsweise Herunterschaltgasse eines Automatikganghebels.

Ferner ist es insgesamt denkbar, dass das erste und/oder das zweite Schaltsignal aus einer Betätigung eines Bremspedals des Kraftfahrzeugs abgeleitet wird.

So kann beispielsweise darauf abgestellt werden, ob das Bremspedal stark oder leicht betätigt wird, also insbesondere mit hoher Geschwindigkeit oder mit niedriger Geschwindigkeit. Bei hoher Geschwindigkeit könnte beispielsweise gleich das erste und das zweite Schaltsignal abgeleitet werden, bei niedriger Schaltgeschwindigkeit hingegen nur das erste Schaltsignal. Auch der Weg des Bremspedals und/oder zeitliche Ableitungen hiervon können folglich dazu verwendet werden, um das erste und/oder das zweite Schaltsignal abzuleiten.

Die Erfindung lässt sich auch wie folgt beschreiben: Anstelle einer direkten Mehrfach-Rückschaltung mit extrem langer Gesamtschaltzeit kann die Schaltung in zwei Schaltungen aufgeteilt werden, nämlich zunächst in die Zwischengangstufe und dann in die Zielgangstufe. Die erste Schaltung in die Zwischengangstufe erfolgt mit wesentlich geringerem Zeitverzug, wobei bereits wesentlich mehr Drehmoment als in der Quellgangstufe verfügbar ist. Erst, wenn der Fahrer noch mehr Drehmoment wünscht und dazu das Stellglied so betätigt, dass das zweite Schaltsignal abgeleitet werden kann, erfolgt die weitergehende Rückschaltung in die Zielgangstufe.

Die Erfindung ist insbesondere dann anwendbar, wenn das Doppelkupplungsgetriebe mehr als fünf Vorwärtsgangstufen aufweist, insbesondere mehr als sechs Vorwärtsgangstufen, da dies insbesondere bei mit Schaltwalzen betätigten Doppelkupplungsgetrieben zu deutlich verlängerten Gesamtschaltzeiten führen kann.

Ferner lässt sich hierdurch auch der Komfort für den Fahrer erhöhen. Denn generell wird durch dieses erfindungsgemäße Verfahren erreicht, dass nicht sofort bei einer erwünschten Mehrfachrückschaltung gleich die niedrigst mögliche Gangstufe angewählt wird (beispielsweise aufgrund eines Kickdowns). Demzufolge wird ein schreckhaftes Ansteigen der Motordrehzahl bei einem Kickdown vermieden und so ein insgesamt harmonischeres Verhalten des Kraftfahrzeuges erzeugt. Erst dann, wenn die Betätigung des Stellsignals dazu führt, dass sich das zweite Schaltsignal ableiten lässt, wird die Zielgangstufe (vorzugsweise vorliegend die niedrigst mögliche Gangstufe) eingelegt.

Demzufolge lässt sich das erfindungsgemäße Verfahren nicht nur bei schaltwalzenbetätigten Doppelkupplungsgetrieben verwenden, sondern auch bei Doppelkupplungsgetrieben, deren Schaltaktuatoreinrichtung beispielsweise hydraulische Schaltzylinder oder dergleichen aufweist und folglich direkte Mehrfachrückschaltungen generell möglich wären.

Generell lässt sich das erfindungsgemäße Verfahren auch bei Wandler-Getrieben verwenden, sowie bei automatisierten Schaltgetrieben (ASG).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines Antriebstranges zur Durchführung des erfindungsgemäßen Steuerverfahrens;
- Fig. 2: eine axiale schematische Draufsicht auf zwei Schaltwalzen des Doppelkupplungsgetriebes;
- Fig. 3: eine schematische Darstellung des erfindungsgemäßen Steuerverfahrens bei einer Rückschaltung 7→3;
- Fig. 4: eine schematische Darstellung des erfindungsgemäßen Steuerverfahrens bei einer Rückschaltung 7→2;
- Fig. 5: eine schematische Darstellung des erfindungsgemäßen Steuerverfahrens bei einer Rückschaltung 6→2;
- Fig. 6: eine schematische Darstellung des erfindungsgemäßen Steuerverfahrens bei einer Rückschaltung 6→1;
- Fig. 7: eine schematische Darstellung des erfindungsgemäßen Steuerverfahrens bei einer Rückschaltung 5→1;
- Fig. 8: eine schematische Darstellung eines erfindungsgemäßen Steuerverfahrens bei einer Rückschaltung 6→3, wobei das Doppelkupplungsgetriebes mittels nur einer Schaltwalze betätigt wird;
- Fig. 9: eine schematische Darstellung eines erfindungsgemäßen Steuerverfahrens bei einer Rückschaltung 6→3, wobei die Schaltaktuatoreinrichtung zwei Schaltwalzen aufweist, so dass eine direkte Mehrfachrückschaltung möglich ist;
- Fig. 10: eine Darstellung eines Rückschaltvorgangs 7-1 (beispielsweise aufgrund eines Bremsvorganges);
- Fig. 11: ein Flussdiagramm mit einer schematischen Darstellung des erfindungsgemäßen Steuerverfahrens;
- Fig. 12: eine Abwicklung einer Schaltwalze, die zur Betätigung von beiden Teilgetrieben eines Doppelkupplungsgetriebes verwendbar ist;
- Fig. 13: einen schematischen zeitlichen Ablauf einer Betätigung eines Stellgliedes in einem Kraftfahrzeug über der Zeit;
- Fig. 14: eine der Fig. 13 entsprechenden Darstellung von weiteren Varianten von Stellgliedbetätigungen; und
- Fig. 15: eine der Fig. 13 und 14 entsprechende Darstellung von weiteren Varianten von Betätigungen eines Stellgliedes.

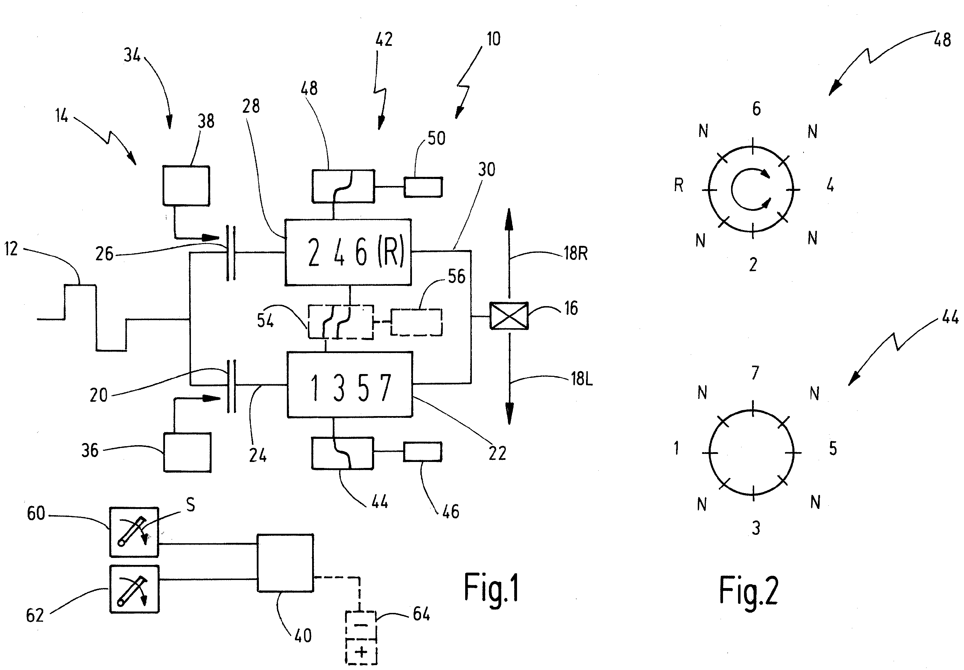

Fig. 1 zeigt in schematischer Form einen Antriebsstrang für ein Kraftfahrzeug für einen Personenkraftwagen, wobei der Antriebsstrang generell mit 10 bezeichnet ist. Der Antriebsstrang 10 beinhaltet einen Antriebsmotor 12 wie einen Verbrennungsmotor oder eine Hybridantriebseinheit, ein Doppelkupplungsgetriebe 14 sowie ein Differential 16, mittels dessen Antriebsleistung auf angetriebene Räder 18L, 18R des Kraftfahrzeugs verteilbar ist.

Das Doppelkupplungsgetriebe 14 weist eine erste Reibkupplung 20 und ein erstes Teilgetriebe 22 auf, die einen ersten Leistungsübertragungszweig 24 bilden. Das erste Teilgetriebe 22 beinhaltet Vorwärtsgangstufen 1, 3, 5, 7. Ferner weist das Doppelkupplungsgetriebe 14 eine zweite Reibkupplung 26 und ein zweites Teilgetriebe 28 auf, die einen zweiten Leistungsübertragungszweig 30 bilden. Das zweite Teilgetriebe 28 weist die geraden Vorwärtsgangstufen 2, 4, 6, und gegebenenfalls 8 auf, und weist vorliegend vorzugsweise auch eine Rückwärtsgangstufe R auf.

Zudem beinhaltet das Doppelkupplungsgetriebe 14 eine Kupplungsaktuatoreinrichtung 34 mit einem ersten Kupplungsaktuator 36 und einem zweiten Kupplungsaktuator 38. Die Kupplungsaktuatoren 36, 38 werden von einer Steuereinrichtung 40 angesteuert und dienen dazu, die Reibkupplungen 20, 26 zu öffnen, zu schließen, oder in einen Schlupfzustand zu versetzen. Die Kupplungsaktuatoren 36, 38 können elektromechanische oder hydraulische Aktuatoren sein.

Ferner weist das Doppelkupplungsgetriebe 14 eine Schaltaktuatoreinrichtung 42 zum Ein- und Auslegen der Gangstufen des Doppelkupplungsgetriebes 14 auf. Die Schaltaktuatoreinrichtung 42 beinhaltet eine erste Schaltwalze 44, die von einem ersten Elektromotor 46 angetrieben ist, sowie eine zweite Schaltwalze 48, die von einem zweiten Elektromotor 50 angetrieben ist.

Die erste Schaltwalze 44 dient zum ein- und Auslegen der Gangstufen des ersten Teilgetriebes 22. Die zweite Schaltwalze 48 dient zum Ein- und Auslegen der Gangstufen des zweiten Teilgetriebes 28.

Die erste Schaltwalze 44 weist dabei wenigstens eine nicht näher bezeichnete Schaltkontur auf, und die damit angesteuerten Gangstufen sind an der Schaltwalze 44 in Umfangsrichtung verteilt angeordnet, wie es in Fig. 2 dargestellt ist. In entsprechender Weise weist die zweite Schaltwalze 48 wenigstens eine Umfangs- bzw. Schaltkontur auf, wobei die Gangstufen des zweiten Teilgetriebes 28 ebenfalls über den Umfang verteilt sind, wie es ebenfalls in Fig. 2 dargestellt ist.

Anstelle von zwei Schaltwalzen 44, 48, die vorzugsweise unabhängig voneinander betätigbar sind, kann die Schaltaktuatoreinrichtung 42 auch eine einzelne Schaltwalze zum Betätigen sämtlicher Gangstufen des Doppelkupplungsgetriebes 14 aufweisen, wie es in Fig. 1 bei 54 angedeutet ist. In diesem Fall dient ein einzelner Elektromotor 56 zum Antrieb der einzelnen Schaltwalze 54.

Ferner zeigt Fig. 1, dass die Steuereinrichtung 40 ein Signal von einem Gaspedal 60 sowie von einem Bremspedal 62 empfängt. Hierzu sind dem Gaspedal 60 und dem Bremspedal 62 geeignete Sensoren, wie beispielsweise Wegsensoren zugeordnet, die beispielsweise den Weg s des Gaspedals 60 messen und an die Steuereinrichtung 40 weitergeben. Die Steuereinrichtung 40 kann ferner mit einem Gangwahlhebel verbunden sein, wie es bei 64 angedeutet ist, insbesondere mit einem Herunterschalthebel 64, der beispielsweise in einer Mittelkonsole verstellbar gelagert ist, oder eine Schaltwippe, die an einem Lenkrad angeordnet ist.

Der Antriebsstrang 10 wird gewöhnlich auf konventionelle Art und Weise betrieben. Das heißt, Antriebsleistung wird jeweils über einen Leistungsübertragungszweig 24 oder 30 übertragen. In dem anderen Leistungsübertragungszweig wird eine Gangstufe vorgewählt. Die Antriebsleistung kann dann auf den anderen Leistungsübertragungszweig übergeben werden, indem die Reibkupplungen 20, 26 auf überschneidende Art und Weise betätigt werden, so dass Gangwechsel ohne Zugkrafteinbruch durchgeführt werden können.

Bei Doppelkupplungsgetrieben, deren Schaltaktuatoreinrichtung eine oder zwei Schaltwalzen aufweist, können Mehrfachrückschaltungen, wie sie beispielsweise in herkömmlichen Doppelkupplungsgetriebe mittels eines sogenannten Kickdown ausgelöst werden, eine vergleichsweise lange Zeit benötigen.

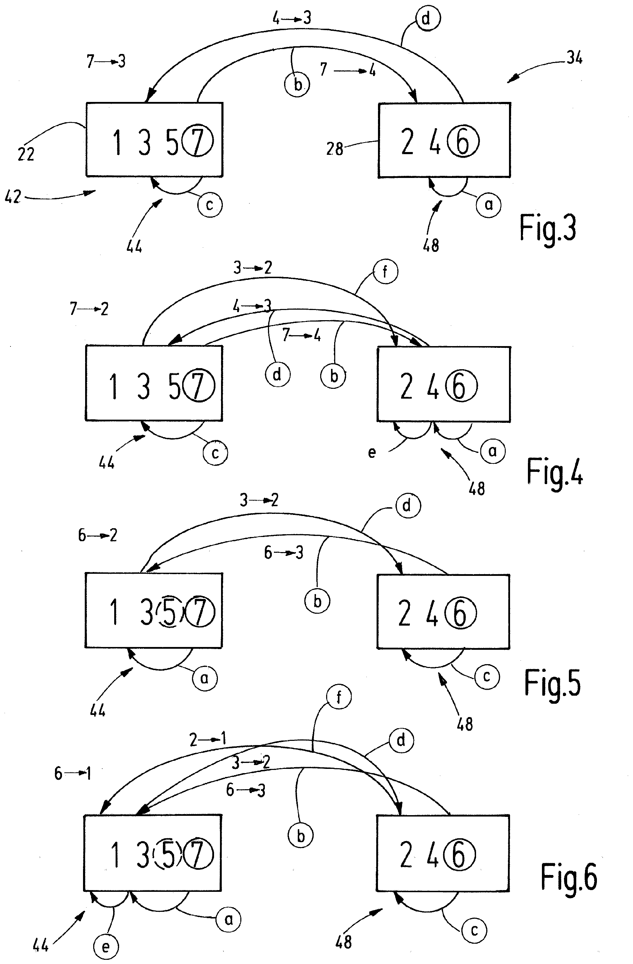

Vorliegend wird vorgeschlagen, derartige Mehrfachrückschaltungen in zwei Stufen durchzuführen, wobei ausgehend von einer Quellgangstufe zunächst eine Zwischengangstufe eingelegt wird. Erst dann, wenn mittels eines zweiten Schaltsignals eine "Bestätigung" generiert wird, wonach der Fahrer tatsächlich nicht nur in die Zwischengangstufe sondern in die noch niedrigere Zielgangstufe schalten möchte, wird auch der zweite Schritt durchgeführt, bei dem die Zwischengangstufe abgewählt wird und die Zielgangstufe eingelegt wird. Beispielsweise derartiger Mehrfachrückschaltungen werden nachfolgend anhand der Fig. 3 bis 10 erläutert. In den Fig. 3 bis 10 sind jeweils das erste und das zweite Teilgetriebe 22, 28 schematisch dargestellt. Ferner sind unterhalb der Teilgetriebe jeweils Gangwechsel in dem einem oder dem anderen Teilgetriebe dargestellt. Oberhalb der Teilgetriebe sind jeweils Wechsel von einem Leistungsübertragungszweig auf den anderen Leistungsübertragungszweig dargestellt, wobei die zugeordneten Reibkupplungen jeweils überschneidend betätigt werden.

Fig. 3 zeigt eine Mehrfachrückschaltung von einer Quellgangstufe 7 in eine Zielgangstufe 3. Hierbei wird in einem Schritt a) zunächst in dem zweiten Teilgetriebe 28 eine Zwischengangstufe 4 eingelegt. Anschließend wird die Leistung im Schritt b) auf den anderen Leistungsübertragungszweig übertragen, so dass Antriebsleistung über die Zwischengangstufe 4 auf die angetriebenen Räder geführt wird. Erst wenn ein zweites Schaltsignal aus einer Betätigung eines Stellgliedes wie eines Gaspedals durch den Fahrer abgeleitet wird (oder Betätigung des Bremspedals 62 und/oder Betätigung des Gangwahlschalters 64), wird die Zielgangstufe 3 in dem ersten Teilgetriebe 22 eingelegt (Schritt c), und die Leistung wird wieder auf den ersten Leistungsübertragungszweig übertragen, wie es bei d) gezeigt ist, so dass Antriebsleistung anschließend über die Zielgangstufe 3 auf die angetriebenen Räder übertragen wird.

Nach dem Schritt b) kann der Schritt c) des Einlegens der Zielgangstufe erfolgen, ohne dass zwangsläufig eine Leistungsübergabe im Schritt d) erfolgt. Die Leistungsübergabe im Schritt d) erfolgt wie gesagt nur dann, wenn das zweite Schaltsignal abgeleitet bzw. aus einer durch den Fahrer erfolgenden Betätigung des Stellgliedes errechnet wird.

Fig. 4 zeigt eine Mehrfachrückschaltung von einer Quellgangstufe 7 in eine Zielgangstufe 2.

Die Schritt a) bis d) sind identisch wie bei dem vorherigen Verfahren. Die am Ende des Schrittes d) eingelegte und zur Leistungsübertragung verwendete Gangstufe 3 ist hierbei jedoch lediglich eine Füllgangstufe, da in diesem Fall die Zwischengangstufe und die Zielgangstufe in dem gleichen Teilgetriebe 28 liegen und folglich ein direktes Wechseln von der Gangstufe 4 in die Gangstufe 2 nur mit Zugkraftunterbrechung möglich wäre. Durch zwischenzeitliches Einlegen der Füllgangstufe kann eine Zugkraftunterbrechung jedoch vermieden werden. Demzufolge wird nach dem Schritt d), das heißt nach dem Übergeben der Antriebsleistung auf den Leistungsübertragungszweig mit der Gangstufe 3, im Schritt e) in dem zweiten Teilgetriebe die Zielgangstufe 2 eingelegt, und in einem Schritt f) wird die Leistung wieder auf den zweiten Leistungsübertragungszweig mit der Gangstufe 2 übertragen.

Fig. 5 zeigt ein Verfahren zum Herunterschalten aus einer Quellgangstufe 6 in eine Zielgangstufe 2. Das Verfahren entspricht generell dem Verfahren der Fig. 3, wobei ausgehend von der Quellgangstufe 6 zunächst in dem anderen Teilgetriebe die Zwischengangstufe 3 eingelegt wird (Schritt a)). Anschließend erfolgt die Übergabe der Antriebsleistung auf das erste Teilgetriebe, so dass Antriebsleistung über die Zwischengangstufe 3 übertragen werden kann. Nach dem Öffnen der Reibkupplung des zweiten Teilgetriebes kann dort die Zielgangstufe 2 eingelegt werden (Schritt c)), um dann schließlich für den Fall, dass das zweite Schaltsignal abgeleitet wird, in einem Schritt d) die Leistung wieder auf das zweite Teilgetriebe zu übertragen, so dass Antriebsleistung über die Zielgangstufe 2 übertragen wird.

Fig. 6 zeigt eine Mehrfachrückschaltung von der Quellgangstufe 6 in die Zielgangstufe 1. Das Verfahren entspricht vom Ablauf her generell dem Verfahren der Fig. 4. Auch hier wird zunächst eine Zwischengangstufe 3 eingelegt, und erst nach Ableiten des zweiten Schaltsignals wird dann die Zielgangstufe 1 eingelegt, wobei zwischenzeitlich als Füllgang die Gangstufe 2 eingelegt wird.

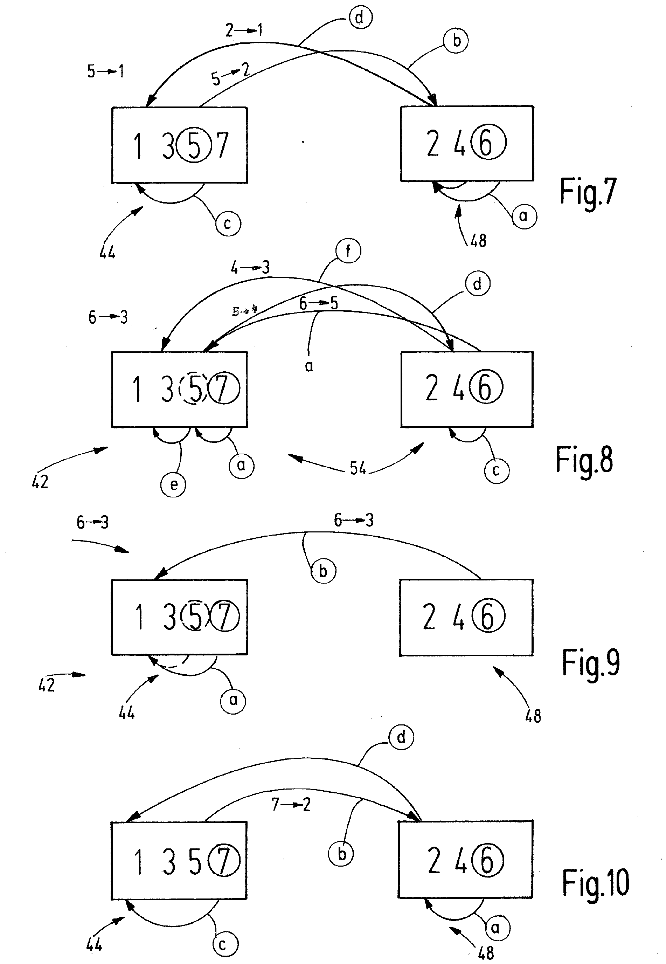

Fig. 7 zeigt einen Mehrfachherunterschaltvorgang von der Quellgangstufe 5 in die Zielgangstufe 1. Das Verfahren entspricht dem Prinzip nach wiederum den Verfahren der Fig. 3 und 5. Zunächst wird in dem zweiten Teilgetriebe als Zwischengangstufe die Gangstufe 2 eingelegt (Schritt a)). Dann erfolgt die Leistungsübergabe auf das zweite Teilgetriebe. Anschließend wird in dem Teilgetriebe der Quellgangstufe 5 die Zielgangstufe 1 eingelegt, und dann, wenn das zweite Schaltsignal abgeleitet wird, wird die Leistung wieder auf das erste Teilgetriebe übertragen, um auf diese Weise Antriebsleistung über die Zielgangstufe 1 übertragen zu können.

In Fig. 8 ist ein Rückschaltvorgang von der Quellgangstufe 6 in die Zielgangstufe 3 gezeigt, wobei hier ein Doppelgetriebe mit nur einer Schaltwalze 54 verwendet wird. Der Gangstufenwechsel erfolgt hierbei rein sequentiell, so dass in einem Schritt a) zunächst die Gangstufe 5 eingelegt wird, wenn diese noch nicht eingelegt ist. In einem Schritt b) wird dann die Leistung auf das erste Teilgetriebe übertragen, so dass Antriebsleistung über die Gangstufe 5 übertragen wird. Ferner wird im Schritt c) dann in dem zweiten Teilgetriebe die Gangstufe 4 eingelegt, und im Schritt d) wird die Leistung dann vom ersten auf das zweite Teilgetriebe übertragen, so dass Leistung über die Gangstufe 4 übertragen wird. Im ersten Teilgetriebe wird dann im Schritt e) die Zielgangstufe 3 eingelegt, und im Schritt f) wird schließlich die Leistung wieder auf das erste Teilgetriebe übertragen, um Leistung über die Zielgangstufe übertragen zu können.

Bei diesem Verfahren können sowohl die Gangstufe 5 als auch die Gangstufe 4 eine Zwischengangstufe im Sinne der vorliegenden Erfindung darstellen. Wenn die Zwischengangstufe die Gangstufe 5 ist, dann ist die Gangstufe 4 eine Füllgangstufe. Wenn die Zwischengangstufe die Gangstufe 4 ist, ist es im Gegensatz zu den obigen Verfahren notwendig, ausgehend von der Quellgangstufe zum Einrichten der Zwischengangstufe zwei überschneidende Betätigungen der Reibkupplungen durchzuführen (Schritt b) und d)). Bei den obigen Verfahren ist zum Einlegen der Zwischengangstufe generell nur eine überschneidende Betätigung von Reibkupplungen notwendig.

Fig. 9 zeigt im Vergleich, wie eine Mehrfachrückschaltung von Quellgangstufe 6 nach Zielgangstufe 3 in einem Doppelkupplungsgetriebe durchgeführt werden kann, das zwei Schaltwalzen 44, 48 aufweist. In diesem Fall wird in dem ersten Teilgetriebe einfach die dritte Gangstufe eingelegt (Schritt a)), und dann wird die Leistung auf das erste Teilgetriebe übergeben (Schritt b)).

Für diesen Fall ist die Durchführung des erfindungsgemäßen Verfahrens folglich nicht notwendig.

Schließlich zeigt Fig. 10 einen Rückschaltvorgang von einer Quellgangstufe 7 in eine Zielgangstufe 1, beispielsweise bei einem starken Bremsvorgang. Auch hierbei wird in einem Schritt a) zunächst in dem zweiten Teilgetriebe die Zwischengangstufe 2 eingelegt und im Schritt b) wird die Leistung auf das zweite Teilgetriebe übertragen. Erst wenn das zweite Schaltsignal abgeleitet wird, wird im ersten Teilgetriebe die Zielgangstufe 1 eingelegt (Schritt c)), und die Leistung wird vom zweiten auf das erste Teilgetriebe übertragen (Schritt d)). Jedenfalls wird der Schritt d) hierbei nur dann ausgeführt, wenn das zweite Schaltsignal auch tatsächlich abgeleitet wird.

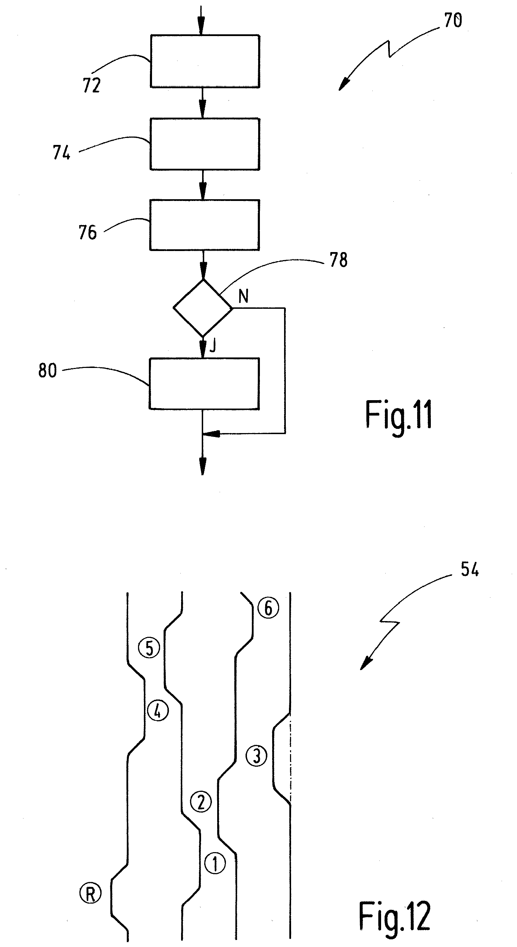

Fig. 11 zeigt in schematischer Form ein Flussdiagramm 70 eines erfindungsgemäßen Steuerverfahrens.

In einem ersten Schritt 72 wird zunächst aus einer Betätigung eines Stellgliedes, die durch den Fahrer erfolgt, ein erstes Schaltsignal abgeleitet, beispielsweise ein Kickdown-Signal.

Im Schritt 74 wird dann eine Zielgangstufe errechnet, die niedriger ist als die Quellgangstufe und die dem ersten Schaltsignal entspricht. Dies ist vorzugsweise die niedrigst mögliche Gangstufe, die in dem jeweiligen Fahrzustand einlegbar ist.

Im Schritt 76 wird dann eine Zwischengangstufe zwischen der Quellgangstufe und der Zielgangstufe ausgewählt, die der Quellgangstufe entsprechende Reibkupplung wird geöffnet und die der Zwischengangstufe entsprechende Reibkupplung wird geschlossen, um Antriebsleistung über den der Zwischengangstufe entsprechenden Leistungsübertragungszweig zu übertragen.

Im Schritt 78 wird abgefragt, ob ein zweites Schaltsignal abgeleitet worden ist, das aus einer Betätigung eines Stellgliedes durch den Fahrer herrührt. Wenn dies nicht der Fall ist bzw. nicht nach einer vorbestimmten Zeitspanne der Fall ist, endet das Verfahren, und der Fahrer setzt den Fahrbetrieb in der Zwischengangstufe fort.

Für den Fall, dass die Antwort in der Frage 78 ja ist, wird die Zielgangstufe eingelegt, die der Zwischengangstufe entsprechende Reibkupplung wird geöffnet und die der Zielgangstufe entsprechende Reibkupplung wird geschlossen, um anschließend Antriebsleistung über die Zielgangstufe übertragen zu können.

Fig. 12 zeigt eine schematische Abwicklung einer einzelnen Schaltwalze 54 zum Schalten sämtlicher Gangstufen des Doppelkupplungsgetriebes. Die Schaltwalze 54 weist vier Schaltkurven auf, die jeweiligen Schaltkupplungspaketen für die Gangstufen R, 4 bzw. 1, 5 bzw. 2, 6 bzw. 3 entsprechen. Die Schaltkurven überschneiden sich in Umfangsrichtung teilweise, so dass benachbarte Gangstufen gleichzeitig eingelegt sein können, um auf diese Weise zugkraftunterbrechungsfreie Übertragungen von Antriebsleistung von dem einem Leistungsübertragungszweig auf den anderen Leistungsübertragungszweig durchführen zu können.

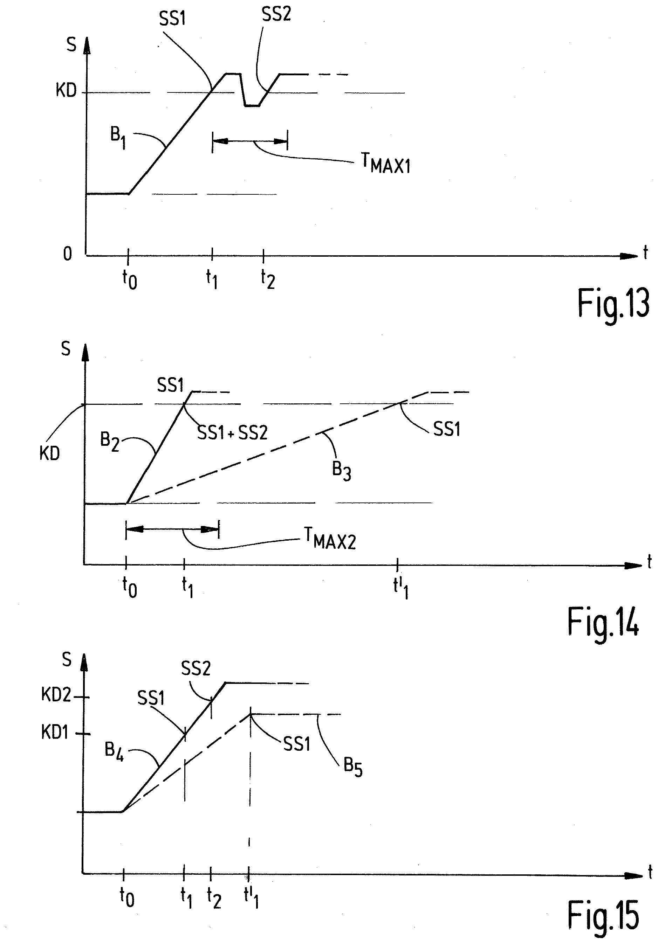

Die Fig. 13 bis 15 zeigen schematische Darstellungen von beispielhaften Betätigungsarten eines Stellgliedes, hier beispielhaft angenommen anhand einer Betätigung eines Gaspedals, dessen Stellweg bei s eingetragen ist. In den drei Figuren 13 bis 15 geht ein erfindungsgemäßes Steuerverfahren jeweils aus von einem Fahrbetrieb, bei dem das Gaspedal zu einem gewissen Grad durchgedrückt ist, so dass ein Fahrbetrieb in einer hohen Quellgangstufe eingerichtet werden kann. Zu einem Zeitpunkt t₀ erfolgt dann jeweils eine Betätigung des Gaspedals, wobei die Betätigungen jeweils mit B₁ bis B₅ bezeichnet sind.

Im Beispiel der Fig. 13 ist eine Betätigung gezeigt, bei der das Gaspedal zu einem Zeitpunkt t₁ einen Schwellenwert KD (Kickdown) überschreitet. Dies führt zur Ableitung des ersten Schaltsignals SS1. Anschließend lässt der Fahrer das Gaspedal wieder etwas los, so dass der Schwellenwert KD wieder unterschritten wird, und anschließend wird der Schwellenwert KD nochmals überschritten, was ein zweites Schaltsignal SS2 auslöst bzw. ableitbar macht. Dabei muss das nacheinander erfolgende Überschreiten des Schwellenwertes KD innerhalb einer vorgegebenen Zeitspanne T_{MAX}, erfolgen.

Fig. 14 zeigt eine Ausführungsform, bei der dann, wenn ausgehend von dem Fahrzustand zum Zeitpunkt t₀ der Schwellenwert KD innerhalb einer sehr kurzen Zeit T_{MAX2} erreicht wird, beide Schaltsignale SS1 und SS2 ausgelöst werden. Diese Betätigungsart ist in Fig. 14 mit B₂ bezeichnet. Wenn der Schwellenwert KD hingegen erst nach der Zeit T_{MAX2} erreicht wird, was in Fig. 14 bei B₃ dargestellt ist, wird mit Erreichen des Schwellenwertes KD nur das erste Schaltsignal SS1 ausgelöst. Hieran kann sich die Abfrage anschließen, ob innerhalb des Zeitraumes T_{MAX1} eine nochmalige Betätigung des Gaspedals bzw. ein nochmaliges Überschreiten des Schwellenwertes KD erfolgt, wie in Fig. 13 gezeigt.

Anstelle eines Vergleiches mit einer Zeit T_{MAX2} kann auch direkt eine zeitliche Ableitung des Weges s des Gaspedals als Berechnungsgrundlage zur Ermittlung der Schaltsignale SS1, SS2 herangezogen werden.

Fig. 15 zeigt eine weitere Ausführungsform, bei der über dem Gaspedalweg s zwei Schwellenwerte KD1 und KD2 eingerichtet sind. Bei Überschreiten des ersten Schwellenwertes KD1 wird generell nur das erste Schaltsignal SS1 ausgelöst. Erst mit Überschreiten des zweiten Schwellenwertes KD2 wird auch das zweite Schaltsignal SS2 ausgelöst, wie es für die Betätigungsart B₄ gezeigt ist.

Wenn hingegen nach dem Auslösen des Schaltsignales SS1 das Gaspedal in einer Stellung vor dem zweiten Schwellenwert KD2 verbleibt, wie es in Fig. 15 bei B₅ gezeigt ist, wird das zweite Schaltsignal SS2 nicht ausgelöst.

## Patentansprüche

1. Verfahren zum Steuern eines Antriebsstranges (10) eines Kraftfahrzeuges, der einen Antriebsmotor (12) und ein Doppelkupplungsgetriebe (14) aufweist, wobei das Doppelkupplungsgetriebe (14) eine erste Reibkupplung (20) und eine zweite Reibkupplung (26) sowie ein erstes Teilgetriebe (22) und ein zweites Teilgetriebe (28) aufweist, um einen ersten Leistungsübertragungszweig (24) und einen zweiten Leistungsübertragungszweig (30) einzurichten, wobei das Doppelkupplungsgetriebe (14) eine Kupplungsaktuatoreinrichtung (34) zum Betätigen der Reibkupplungen (20, 26) sowie eine Schaltaktuatoreinrichtung (42) zum Ein- und Auslegen von Gangstufen (1-7,R) des Doppelkupplungsgetriebes (14) aufweist, mit den folgenden, von einem Fahrbetrieb des Kraftfahrzeuges in einer hohen Quellgangstufe (7; 6; 5) ausgehenden Schritten:
- Ableiten eines ersten Schaltsignals (SS1) aus einer Betätigung eines Stellgliedes (60; 62) durch den Fahrer;
- Errechnen einer Zielgangstufe (3; 2; 1), die niedriger ist als die Quellgangstufe (7; 6; 5) und die dem ersten Schaltsignal (SS1) entspricht;
- Auswählen einer Zwischengangstufe (4; 3; 2) zwischen der Quellgangstufe (7; 6; 5) und der Zielgangstufe (3; 2; 1), Öffnen der der Quellgangstufe entsprechenden Reibkupplung und Schließen der der Zwischengangstufe entsprechenden Reibkupplung, um Antriebsleistung über den der Zwischengangstufe entsprechenden Leistungsübertragungszweig zu übertragen; und
- Einlegen der Zielgangstufe (3; 2; 1), Öffnen der der Zwischengangstufe (4; 3; 2) entsprechenden Reibkupplung und Schließen der der Zielgangstufe (3; 2; 1) entsprechenden Reibkupplung für den Fall, dass ein zweites Schaltsignal (SS2) aus einer Betätigung eines Stellgliedes (60; 62; 64) durch den Fahrer abgeleitet wird.

2. Steuerverfahren nach Anspruch 1, wobei für den Fall, dass nach dem Ableiten des ersten Schaltsignals (SS1) innerhalb einer vorgegebenen Zeitspanne (T_{MAX1}) kein zweites Schaltsignal (SS2) aus einer Betätigung eines Stellgliedes (60; 62; 64) durch den Fahrer abgeleitet wird, zumindest das Öffnen der der Zwischengangstufe (4; 3; 2) entsprechenden Reibkupplung und Schließen der der Zielgangstufe (3; 2; 1) entsprechenden Reibkupplung nicht durchgeführt werden.

3. Steuerverfahren nach Anspruch 1 oder 2, wobei die Schaltaktuatoreinrichtung (42) eine erste Schaltwalze (44) zum Ein- und Auslegen von Gangstufen des ersten Teilgetriebes (22) und eine zweite Schaltwalze (48) zum Ein- und Auslegen von Gangstufen des zweiten Teilgetriebes (28) aufweist und wobei die Quellgangstufe (7; 6; 5) einem der zwei Teilgetriebe (22, 28) und die Zwischengangstufe (4; 3; 2) dem anderen Teilgetriebe zugeordnet ist.

4. Steuerverfahren nach Anspruch 3, wobei der Schritt des Auswählens der Zwischengangstufe (4; 3; 2) beinhaltet, vor dem Schritt des Schließens der der Zwischengangstufe entsprechenden Reibkupplung die Zwischengangstufe (4; 3; 2) in dem zugeordneten Teilgetriebe einzulegen, falls die Zwischengangstufe nicht bereits eingelegt ist.

5. Steuerverfahren nach Anspruch 3 oder 4, wobei die Zielgangstufe (3; 2; 1) dem gleichen Teilgetriebe zugeordnet ist wie die Quellgangstufe (7; 6; 5) und wobei nach dem Öffnen der der Quellgangstufe entsprechenden Reibkupplung die Zielgangstufe (3; 2; 1) in dem einen Teilgetriebe eingelegt wird, um für den Fall des Ableitens des zweiten Schaltsignals (SS2) das Öffnen der der Zwischengangstufe (4; 3; 2) entsprechenden Reibkupplung und das Schließen der der Zielgangstufe (3; 2; 1) entsprechenden Reibkupplung verzögerungsarm durchführen zu können.

6. Steuerverfahren nach Anspruch 3 oder 4, wobei die Zielgangstufe (2; 1) dem gleichen Teilgetriebe zugeordnet ist wie die Zwischengangstufe (4; 3), wobei nach dem Auslegen der Quellgangstufe in dem der Quellgangstufe zugeordneten Teilgetriebe eine zwischen der Zwischengangstufe und der Zielgangstufe liegende Füllgangstufe (3; 2) eingelegt wird, wobei für den Fall des Ableitens des zweiten Schaltsignals (SS2) die der Zwischengangstufe (4; 3) entsprechende Reibkupplung geöffnet und die der Füllgangstufe (3; 2) entsprechende Reibkupplung geschlossen wird, wobei nach dem Auslegen der Zwischengangstufe (4; 3) die Zielgangstufe (2; 1) eingelegt wird, und wobei anschließend die der Füllgangstufe (3; 2) entsprechende Reibkupplung geöffnet und die der Zielgangstufe (2; 1) entsprechende Reibkupplung geschlossen wird.

7. Steuerverfahren nach Anspruch 1 oder 2, wobei die Schaltaktuatoreinrichtung (42) eine Schaltwalze (54) zum Ein- und Auslegen von Gangstufen (1-7,R) des ersten und des zweiten Teilgetriebes (22, 28) aufweist.

8. Steuerverfahren nach einem der Ansprüche 1 - 7, wobei das erste und/oder das zweite Schaltsignal (SS1, SS2) aus einer Betätigung eines Gaspedals (60) des Kraftfahrzeuges abgeleitet wird.

9. Steuerverfahren nach Anspruch 8, wobei das erste und/oder das zweite Schaltsignal (SS1, SS2) aus dem Weg (s) des Gaspedals (60) und/oder aus einer ersten und/oder zweiten zeitlichen Ableitung (ṡ; ṡṡ) des Weges (s) des Gaspedals (60) abgeleitet wird.

10. Steuerverfahren nach Anspruch 8 oder 9, wobei das erste Schaltsignal (SS1) abgeleitet wird, wenn ein mit dem Gaspedal (60) des Kraftfahrzeuges gekoppelter Kickdown-Schalter (KD) betätigt wird, und wobei das zweite Schaltsignal (SS2) abgeleitet wird, wenn der Kickdown-Schalter (KD) innerhalb einer vorgegebenen Zeitspanne (T_{MAX1}) ein zweites Mal betätigt wird.

11. Steuerverfahren nach einem der Ansprüche 8 - 10, wobei das zweite Schaltsignal (SS2) aus einer Betätigung eines Gangwahlschalters (64) abgeleitet wird.

12. Steuerverfahren nach einem der Ansprüche 1 - 11, wobei das erste und/oder das zweite Schaltsignal (SS1, SS2)aus einer Betätigung eines Bremspedals (62) des Kraftfahrzeuges abgeleitet wird.

## Claims

1. Method for controlling a drivetrain (10) of a motor vehicle, which comprises a drive engine (12) and a dual-clutch transmission (14), the dual-clutch transmission (14) comprising a first friction clutch (20) and a second friction clutch (26) together with a first transmission unit (22) and a second transmission unit (28), in order to establish a first power transmission branch (24) and a second power transmission branch (30), the dual-clutch transmission (14) comprising a clutch actuator device (34) for actuating the friction clutches (20, 26) and a gearshift actuator device (42) for engaging and disengaging gears (1-7, R) of the dual-clutch transmission (14), said method assuming that the motor vehicle is being driven in a high original gear (7; 6; 5) and comprising the following steps:
- derivation of a first shift signal (SS1) from an actuation of a control element (60; 62) by the driver;
- calculation of a target gear (3; 2; 1), which is lower than the original gear (7; 6; 5) and which corresponds to the first shift signal (SS1);
- selection of an intermediate gear (4; 3; 2) between the original gear (7; 6; 5) and the target gear (3; 2; 1), opening of the friction clutch corresponding to the original gear and closing of the friction clutch corresponding to the intermediate gear, in order to transmit drive power via the power transmission branch corresponding to the intermediate gear; and
- engagement of the target gear (3; 2; 1), opening of the friction clutch corresponding to the intermediate gear (4; 3; 2) and closing of the friction clutch corresponding to the target gear (3; 2; 1) in the event that a second shift signal (SS2) is derived from an actuation of a control element (60; 62; 64) by the driver.

2. Control method according to Claim 1, wherein, at least, the friction clutch corresponding to the intermediate gear (4; 3; 2) is not opened and the friction clutch corresponding to the target gear (3; 2; 1) is not closed, if no second shift signal (SS2) is derived from an actuation of a control element (60; 62; 64) by the driver within a preset period of time (T_{MAX1}) following the derivation of the first shift signal (SS1).

3. Control method according to Claim 1 or 2, wherein the gearshift actuator device (42) comprises a first shift drum (44) for engaging and disengaging gears of the first transmission unit (22) and a second shift drum (48) for engaging and disengaging gears of the second transmission unit (28), and wherein the original gear (7; 6; 5) is assigned to one of the two transmission units (22; 28) and the intermediate gear (4; 3; 2) is assigned to the other transmission unit.

4. Control method according to Claim 3, wherein prior to the step of closing the friction clutch corresponding to the intermediate gear, the step of selecting the intermediate gear (4; 3; 2) involves the engagement of the intermediate gear (4; 3; 2) in the assigned transmission unit, if the intermediate gear is not already engaged.

5. Control method according to Claim 3 or 4, wherein the target gear (3; 2; 1) is assigned to the same transmission unit as the original gear (7; 6; 5), and wherein after opening of the friction clutch corresponding to the original gear, the target gear (3; 2; 1) is engaged in the one transmission unit, in order to be able to open the friction clutch corresponding to the intermediate gear (4; 3; 2) and to close the friction clutch corresponding to the target gear (3; 2; 1) with little delay should the second shift signal (SS2) be derived.

6. Control method according to Claim 3 or 4, wherein the target gear (2; 1) is assigned to the same transmission unit as the intermediate gear (4; 3), the disengagement of the original gear in the transmission unit assigned to the original gear being followed by the engagement of a stopgap gear (3; 2) situated between the intermediate gear and the target gear, the friction clutch corresponding to the intermediate gear (4; 3) being opened and the friction clutch corresponding to the stopgap gear (3; 2) being closed should the second shift signal (SS2) be derived, the target gear (2; 1) being engaged following the disengagement of the intermediate gear (4; 3) and the friction clutch corresponding to the stopgap gear (3; 2) then being opened and the friction clutch corresponding to the target gear (2; 1) being closed.

7. Control method according to Claim 1 or 2, wherein the gearshift actuator device (42) comprises one shift drum (54) for engaging and disengaging gears (1-7, R) of the first and second transmission units (22; 28).

8. Control method according to one of Claims 1-7, wherein the first and/or the second shift signal (SS1, SS2) is/are derived from an actuation of an accelerator pedal (60) of the motor vehicle.

9. Control method according to Claim 8, wherein the first and/or the second shift signal (SS1, SS2) is/are derived from the travel (s) of the accelerator pedal (60) and/or from a first and/or second time derivative (ṡ; ṡṡ) of the travel (s) of the accelerator pedal (60).

10. Control method according to Claim 8 or 9, wherein the first shift signal (SS1) is derived if a kickdown switch (KD) coupled to the accelerator pedal (60) of the motor vehicle is actuated, and wherein the second shift signal (SS2) is derived if the kickdown switch (KD) is actuated for a second time within a preset period of time (T_{MAX1}).

11. Control method according to one of Claims 8-10, wherein the second shift signal (SS2) is derived from an actuation of a gear selector switch (64).

12. Control method according to one of Claims 1-11, wherein the first and/or the second shift signal (SS1, SS2) is/are derived from an actuation of a brake pedal (62) of the motor vehicle.

## Revendications

1. Procédé de commande du train d'entraînement (10) d'un véhicule automobile qui présente un moteur d'entraînement (12) et une transmission (14) à double embrayage, la transmission (14) à double embrayage présentant un premier embrayage à friction (20) et un deuxième embrayage à friction (26) ainsi qu'une première partie de transmission (22) et une deuxième partie de transmission (28) qui établissent une première branche (24) de transmission de puissance et une deuxième branche (30) de transmission de puissance, la transmission (14) à double embrayage présentant un dispositif (34) d'actionnement d'embrayage qui actionne les embrayages à frottement (20, 26) ainsi qu'un dispositif (42) d'actionneur de changement de rapport qui branche et débranche des rapports de transmission (1-7, R) de la transmission (14) à double embrayage, le procédé présentant les étapes suivantes à partir d'une conduite du véhicule automobile dans un étage de transmission initial élevé (7; 6; 5) :
dérivation d'un premier signal (SS1) de changement de rapport à partir de l'actionnement d'un organe de réglage (60; 62) par le conducteur,
calcul d'un rapport de transmission cible (3; 2; 1) plus bas que le rapport de transmission initial (7; 6; 5) et correspondant au premier signal (SS1) de changement de rapport,
sélection d'un rapport de transmission intermédiaire (4; 3; 2) entre le rapport de transmission initial (7; 6; 5) et le rapport de transmission cible (3; 2; 1), ouverture de l'embrayage à frottement qui correspond au rapport de transmission initial et fermeture de l'embrayage à frottement qui correspond au rapport de transmission intermédiaire pour transférer la puissance d'entraînement par l'intermédiaire de la branche de transmission de puissance qui correspond au rapport de transmission intermédiaire et
engagement du rapport de transmission cible (3; 2; 1), ouverture de l'embrayage à frottement qui correspond au rapport de transmission intermédiaire (4; 3; 2) et fermeture de l'embrayage à frottement qui correspond au rapport de transmission cible (3; 2; 1) au cas où un deuxième signal (SS2) de changement de rapport est dérivé de l'actionnement d'un organe de commande (60; 62; 64) par le conducteur.

2. Procédé de commande selon la revendication 1, dans lequel au cas ou après déduction du premier signal (SS1) de changement de rapport à l'intérieur d'un intervalle de temps (T_{MAX1}) prédéterminé, aucun deuxième signal (SS2) de changement de rapport n'a été déduit d'un actionnement d'un organe de commande (60; 62; 64) par le conducteur, au moins l'ouverture de l'embrayage à frottement qui correspond au rapport de transmission intermédiaire (4; 3; 2) et la fermeture de l'embrayage à frottement qui correspond au rapport de transmission cible (3; 2; 1) ne sont pas réalisées.

3. Procédé de commande selon les revendications 1 ou 2, dans lequel le dispositif (42) d'actionneur de changement de rapport présente un premier cylindre (44) de changement de rapport qui permet de brancher et de débrancher les rapports de transmission de la première partie de transmission (22) et un deuxième cylindre (48) de changement de rapport qui branche et débranche les rapports de transmission de la deuxième partie de transmission (28), le rapport de transmission initial (7; 6; 5) étant associé à l'une des deux parties (22, 28) de la transmission et le rapport de transmission intermédiaire (4; 3; 2) à l'autre partie de la transmission.

4. Procédé de commande selon la revendication 3, dans lequel l'étape de sélection du rapport de transmission intermédiaire (4; 3; 2) comprend avant l'étape de fermeture de l'embrayage à frottement qui correspond au rapport de transmission intermédiaire l'engagement du rapport de transmission intermédiaire (4; 3; 2) dans la partie associée de la transmission au cas où le rapport de transmission intermédiaire n'a pas déjà été engagé.

5. Procédé de commande selon les revendications 3 ou 4, dans lequel le rapport de transmission cible (3; 2; 1) est associé à la même partie de la transmission que le rapport de transmission initial (7; 6; 5), et dans lequel après l'ouverture de l'embrayage à frottement qui correspond au rapport de transmission initial, le rapport de transmission cible (3; 2; 1) est engagé dans une des parties de la transmission pour, au cas où le deuxième signal (SS2) de changement de rapport est dérivé, pouvoir ouvrir l'embrayage à frottement qui correspond au rapport de transmission intermédiaire (4; 3; 2) et fermer l'embrayage à frottement qui correspond au rapport de transmission cible (3; 2; 1) sans retard.

6. Procédé de commande selon les revendications 3 ou 4, dans lequel le rapport de transmission cible (2; 1) est associé à la même partie de la transmission que le rapport de transmission intermédiaire (4; 3), et dans lequel après la sortie hors du rapport de transmission initial dans la partie de la transmission associée au rapport de transmission initial, un rapport de transmission complémentaire (3; 2) situé entre le rapport de transmission intermédiaire et le rapport de transmission cible est engagé, et au cas où le deuxième signal (SS2) de changement de rapport est dérivé, l'embrayage à frottement qui correspond au rapport de transmission intermédiaire (4; 3) est ouvert et l'embrayage à frottement qui correspond au rapport de transmission complémentaire (3; 2) est fermé, tandis qu'après le désengagement du rapport de transmission intermédiaire (4; 3), le rapport de transmission cible (2; 1) est engagé et qu'ensuite, l'embrayage à frottement qui correspond au rapport de transmission complémentaire (3; 2) est ouvert et l'embrayage à frottement qui correspond au rapport de transmission cible (2; 1) est fermé.

7. Procédé de commande selon les revendications 1 ou 2, dans lequel le dispositif (42) d'actionneur de changement de rapport présente un cylindre (54) de changement de rapport qui permet de brancher et de débrancher les rapports de transmission (1-7, R) de la première et de la deuxième partie (22, 28) de la transmission.

8. Procédé de commande selon l'une des revendications 1 à 7, dans lequel le premier et/ou le deuxième signal (SS1, SS2) de changement de rapport sont dérivés de l'actionnement de la pédale d'accélération (60) du véhicule automobile.

9. Procédé de commande selon la revendication 8, dans lequel le premier et/ou le deuxième signal (SS1, SS2) de changement de rapport sont dérivés de la course (s) de la pédale d'accélération (60) et/ou d'une première et/ou d'une deuxième dérivée temporelle (*s*'; *ss*') de la course (s) de la pédale d'accélération (60).

10. Procédé de commande selon les revendications 8 ou 9, dans lequel le premier signal (SS1) de changement de rapport est dérivé si un commutateur (KD) d'enfoncement de la pédale d'accélération couplé à la pédale d'accélération (60) du véhicule automobile est actionné, le deuxième signal (SS2) de changement de rapport étant dérivé si le commutateur (KD) d'enfoncement de la pédale d'accélération a été actionné une deuxième fois à l'intérieur d'un intervalle de temps (T_{MAX1}) prédéterminé.

11. Procédé de commande selon l'une des revendications 8 à 10, dans lequel le deuxième signal (SS2) de changement de rapport est dérivé de l'actionnement d'un commutateur (64) de sélection de rapport de transmission.

12. Procédé de commande selon l'une des revendications 1 à 11, dans lequel le premier et/ou le deuxième signal (SS1, SS2) sont dérivés d'un actionnement de la pédale de frein (62) du véhicule automobile.
